# EUROPEAN PATENT APPLICATION

(11) **EP 4 421 727 A1**
(43) Date of publication of application: **28.08.2024**
(21) Application number: 22894990.5
(22) Date of filing: 21.11.2022
(51) Int. Cl.: G06T 3/00

(54) **IMAGE PROCESSING METHOD AND APPARATUS, ELECTRONIC DEVICE, AND STORAGE MEDIUM**

(30) Priority: 22.11.2021 CN 202111387436
(71) Applicant: Beijing Zitiao Network Technology Co., Ltd., Beijing 100190 (CN)
(72) Inventor: LU, Zhixiong, Beijing 100086 (CN)
(74) Representative: Dentons UK and Middle East LLP
(86) International application number: PCT/CN2022/133186
(87) International publication number: WO 2023/088461

(57) **Abstract**

Embodiments of the present disclosure provide an image processing method and apparatus, an electronic device and a storage medium. The method includes: determining a target effect and a target object in an image to be processed according to a received effect generation instruction; and obtaining a target image in which the target object is adapted to the target effect, by applying the target effect to the target object and adjusting an effect part corresponding to the target effect to be adapted to the target effect.

## Description

### CROSS-REFERENCE TO RELATED APPLICATION(S)

This application claims priority to Chinese Application No. 202111387436.7, filed with the China National Intellectual Property Administration on November 22, 2021, the disclosure of which is incorporated herein by reference in its entity.

### FIELD

Embodiments of the present disclosure relate to the technical field of image processing, for example, an image processing method and apparatus, an electronic device and a storage medium.

### BACKGROUND

With the development of the multimedia technology, more and more users tend to use terminal devices to photograph corresponding images, and apply corresponding effects to the photographed images.

However, in practical applications, there is a problem that an effect applied to an object does not match the actual situation, resulting in a relatively unrealistic effect applying result, thus leading to relatively poor usage experience of the users.

### SUMMARY

The present disclosure provides an image processing method and apparatus, an electronic device and a storage medium, so as to improve the adaptability between a target effect and a target object, thereby improving the usage experience of users.

In a first aspect, an embodiment of the present disclosure provides an image processing method, including: determining a target effect and a target object in an image to be processed according to a received effect generation instruction; and obtaining a target image in which the target object is adapted to the target effect, by applying the target effect to the target object and adjusting an effect part corresponding to the target effect to be adapted to the target effect.

In a second aspect, an embodiment of the present disclosure further provides an image processing apparatus, including: a data collection module, configured to determine a target effect and a target object in an image to be processed according to a received effect generation instruction; and an image determination module, configured to obtain a target image in which the target object is adapted to the target effect by applying the target effect to the target object and adjusting an effect part corresponding to the target effect to be adapted to the target effect.

In a third aspect, an embodiment of the present disclosure discloses an electronic device, including: one or more processors; and a storage means, configured to store one or more programs, wherein, when the one or more programs are executed by the one or more processors, the one or more processors are causes to implement any image processing method in the embodiments of the present disclosure.

In a fourth aspect, an embodiment of the present disclosure further provides a storage medium, including a computer-executable instruction, wherein the computer-executable instruction, when being executed by a computer processor, is configured for executing any image processing method in the embodiments of the present disclosure.

### BRIEF DESCRIPTION OF THE DRAWINGS

Throughout the drawings, the same or similar reference signs represent the same or similar elements. It should be understood that the drawings are schematic, and components and elements are not necessarily drawn to scale.
FIG. 1 is a schematic flowchart of an image processing method provided in an embodiment of the present disclosure;
FIG. 2 is a schematic diagram showing a target effect has been applied to a target object provided in an embodiment of the present disclosure;
FIG. 3 is a schematic flowchart of an image processing method provided in another embodiment of the present disclosure;
FIG. 4 is an effect schematic diagram showing deformation processing has been performed on an effect area provided in an embodiment of the present disclosure;
FIG. 5 is a schematic flowchart of an image processing method provided in another embodiment of the present disclosure;
FIG. 6 is an effect schematic diagram showing some pixel points in an effect area has been erased provided in an embodiment of the present disclosure;
FIG. 7 is a schematic structural diagram of an image processing apparatus provided in an embodiment of the present disclosure; and
FIG. 8 is a schematic structural diagram of an electronic device provided in an embodiment of the present disclosure.

### DETAILED DESCRIPTION OF EMBODIMENTS

It should be understood that a plurality of steps recorded in method embodiments of the present disclosure may be executed in different sequences and/or in parallel. In addition, the method embodiments may include additional steps and/or omit executing the steps shown. The scope of the present disclosure is not limited in this respect.

As used herein, the terms "include" and variations thereof are open-ended terms, i.e., "including, but not limited to". The term "based on" is "based, at least in part, on". The term "one embodiment" means "at least one embodiment"; the term "another embodiment" means "at least one additional embodiment"; and the term "some embodiments" means "at least some embodiments". Relevant definitions of other terms will be given in the following description.

It should be noted that concepts such as "first" and "second" mentioned in the present disclosure are only intended to distinguish different apparatuses, modules or units, and are not intended to limit the sequence or interdependence of the functions executed by these apparatuses, modules or units. It should be noted that the modifiers of "one" and "more" mentioned in the present disclosure are intended to be illustrative and not restrictive, and those skilled in the art should understand that they should be interpreted as "one or more" unless the context clearly indicates otherwise.

The names of messages or information interacted between a plurality of apparatuses in the embodiments of the present disclosure are for illustrative purposes only and are not intended to limit the scope of these messages or information.

Before the present technical solution is described, an application scenario may be exemplarily described at first. The technical solution of the present disclosure may be applied to any picture that requires effect presentation, for example, effect presentation may be performed in a video call; or in a live streaming scenario, effect presentation may be performed on a live streamer user; and of course, the present technical solution may also be applied to a situation in which effect presentation is performed on an image corresponding to a photographed user during a video photographing process, for example, under a short video photographing scenario. The present technical solution may also be applied to a built-in photographing apparatus in a terminal, so that when an image is photographed based on the photographing apparatus, a target effect may be applied to a target object in the image on the basis of the technical solution of the present disclosure. After the effect is applied to the target object, a situation may occur in which the effect is not adapted to the target object. Therefore, in order to avoid the mismatch of the effect, the technical solution of the present disclosure may be executed, so that the applied object is adapted to the target object.

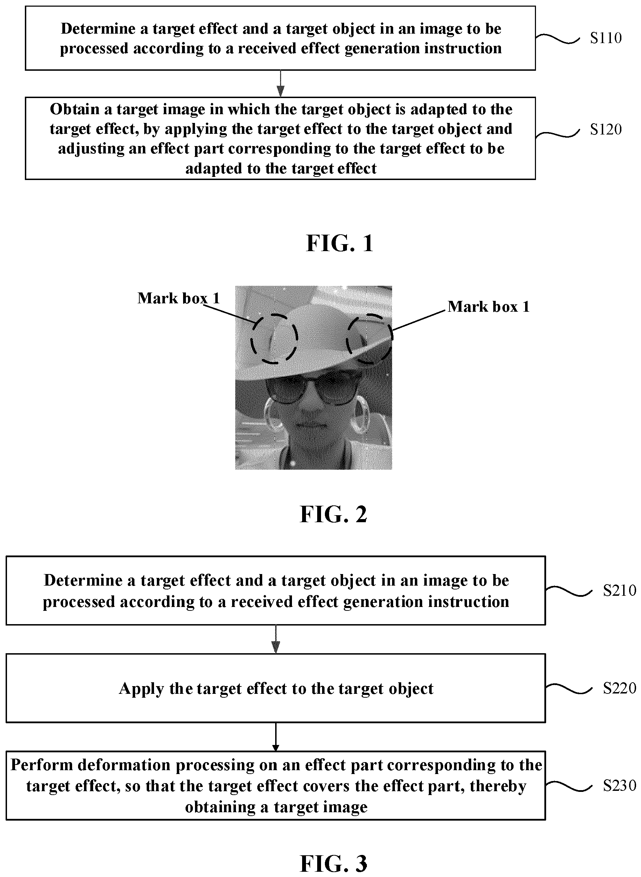

FIG. 1 is a schematic flowchart of an image processing method provided in an embodiment of the present disclosure. The embodiment of the present disclosure is applicable to any image presentation scenario supported by the Internet, and is applied to a situation in which when a target effect is applied to a target object, the target object is adjusted to be adapted to the target effect, so as to present the target object applied with the target effect. The method may be executed by an image processing apparatus, and the apparatus may be implemented in the form of software and/or hardware, for example, implemented by an electronic device, wherein the electronic device may be a mobile terminal, a PC terminal, a server, or the like. A scenario in which any image is presented is usually implemented by the cooperation of a client and a server, and the method provided in the present embodiment may be executed by the server, by the client, or by the cooperation between the client and the server.

As shown in FIG. 1, the method includes the following:

S 110, a target effect and a target object in an image to be processed are determined according to a received effect generation instruction.

It should be noted that, a plurality of applicable scenarios have been briefly described above, and thus details are not described herein again. An apparatus for executing the image processing method provided in the embodiment of the present disclosure may be integrated in application software that supports an image processing function, and the software may be installed in an electronic device, for example, the electronic device may be a mobile terminal or a PC terminal, or the like. The application software may be a type of software for image/video processing, and specific application software thereof is not described herein again, as long as image/video processing may be implemented.

The image to be processed may be an image collected based on the application software, and may also be an image that is pre-stored in a storage space by the application software. In a specific application scenario, the image to be processed may be collected in real time or periodically. For example, in a live streaming scenario or a video photographing scenario, a photographing apparatus collects an image corresponding to a target object included in a target scenario in real time, and at this time, an image collected by the photographing apparatus may be used as the image to be processed. Correspondingly, the target object included in the target scenario may be a user, a pet, flowers, plants and trees, or the like. Of course, the image to be processed may also be a static image photographed by a built-in camera on a terminal. The effect generation instruction may be understood as an instruction for applying an effect to the target object. For example, when the user triggers an effect applying control of a display device, a plurality of effects may be displayed, and an effect triggered and selected by the user may be used as the target effect. That is, an effect to be applied to the target object is used as the target effect.

For example, in any video photographing, live streaming, or image processing scenario, the image to be processed including the target object may be collected in real time or at intervals. Meanwhile, the user may trigger an effect control on the display device, and when it is detected that the effect applying control is triggered, a plurality of effects may be displayed, and the effect triggered and selected by the user is used as the target effect. When the target effect is determined, the target object in the collected image to be processed may be determined.

It should be noted that, there may be one or more target objects in the image to be processed, and no matter there is one or more target objects, the target effect may be applied to the target object by using the technical solution provided in the present disclosure, and the target object is adjusted to be adapted to the target effect.

In the present embodiment, generating the effect generation instruction may include: when it is detected that an effect generation control is triggered, generating the effect generation instruction; or, when it is determined, according to collected voice information, that an effect applying wake-up word is triggered, generating the effect generation instruction; or, when it is detected that a facial feature or posture information of at least one object to be processed in the image to be processed matches preset information, generating the effect generation instruction.

That is, the generation of an effect photographing instruction may include at least three implementations. The first implementation may be the following: when an image is photographed based on a terminal display device, if the user wants to apply a target effect to a target object in the image, the effect applying control may be triggered. When it is detected that the effect applying control is triggered, the effect generation instruction may be generated to pop up a plurality of effects to be applied for the selection of the user. The second implementation may be the following: in a live video scenario, such as live streaming sales and video photographing processes, voice information of a live streamer user or a photographed object may be collected, and the collected voice information is analyzed and processed, so as to recognize characters corresponding to the voice information. If the characters corresponding to the voice information include a preset wake-up word, for example, the wake-up word may be a word of a type such as "please enable an effect function", it indicates that a target effect needs to be applied to the target object, and at this time, the effect generation instruction may be generated. The third implementation may be the following: an object displayed in the image to be processed may be used as an object to be processed. The object to be processed may include the target object, and all the objects to be processed may also be used as the target object. The facial feature may be facial information of the object to be processed, and the posture information may be a gesture or a posture of the object to be processed. The preset information may be a preset posture for generating the effect generation instruction, for example, the preset information may be the target object touching the head, or a preset specific posture. For example, the image to be processed including the object to be processed may be collected in real time, and when it is detected that the facial feature or the posture information in the object to be processed matches the preset information, the effect generation instruction may be generated. That is, an instruction for applying the target effect to the target object in the image to be processed is generated.

In the present embodiment, after the effect generation instruction is received, the target effect and the target object in the image to be processed may be determined, for example, the target effect corresponding to the effect generation instruction is determined. If the image to be processed includes a plurality of objects to be processed, the target object is determined from the plurality of objects to be processed according to a preset object determination rule. The object determination rule includes at least one of the following: using the object to be processed in a preset area in the image to be processed as the target object, using each of the plurality of objects to be processed as the target object, and using a preset main photographed object as the target object.

After the effect applying control is triggered, a page including a plurality of effects may be popped up, and the user may trigger any one of the effects, and use the selected effect as the target effect. The target effect may be an ornament worn on the head, for example, the target effect may be a hat. The image to be processed may include a plurality of objects to be processed, and each of the plurality of objects to be processed may be used as the target object, and the target effect is applied thereto. However, in actual applications, it is not desired to apply the target effect to all the images to be processed, and at this time, the target object may be determined from the plurality of objects to be processed according to a certain rule. The object determination rule may be that the target object is determined from the plurality of objects to be processed. The preset area may be a specific area in a photographed image, and the object to be processed located in the specific area is used as the target object. In a video photographing or live streaming scenario, a main photographed object may be preset, and the main photographed object is used as the target object.

Exemplarily, there may be one or more objects in the target scenario, and in order to achieve the pertinence of effect presentation, a main target object may be preset, or a user located in a certain area in the image to be processed is preset as the main target object.

It should be noted that, the image to be processed may only include the target object, and may also include other objects other than the target object. If the photographed image to be processed includes a plurality of users, each of the plurality of users may be used as the target object, and the target effect is applied thereto; and if there is only one user, the user may be used as the target object. Of course, if a plurality of users are included, only one user is processed, and a corresponding image processing rule may be preset, so that when the photographed image to be processed includes a plurality of users, the target object may be determined from the plurality of users.

Exemplarily, there is a corresponding control on a display interface to select the main photographed object. A main photographing area may be set, for example, a left half area in a camera entry picture is used as the main photographing area, and correspondingly, the user corresponding to the main photographing area is the target object. If the user presets the main target object, the target object in the image to be processed may be determined according to a preset rule, and then the target effect is applied thereto.

Of course, if the main target object is not set, each of a plurality of users in the camera entry picture may be used as the target object.

S120, a target image in which the target object is adapted to the target effect is obtained by applying the target effect to the target object and adjusting an effect part corresponding to the target effect to be adapted to the target effect.

The target effect may be a hat, a wig and other effects. An object to which the target effect is applied is used as the target object. The target effect may be applied to the target object. For example, if the target effect is a hat, then the target effect needs to be applied to the head of the target object.

Generally, after the target effect is applied to the target object, a problem may occur in which the target effect is not adapted to the target object. For example, referring to FIG. 2, after a hat effect is applied to a head area of the target object, there is a problem that the hat is not adapted to the head area, for example, some hairs (a mark box 1) are outside the hat, that is, the hat effect is not completely worn on the head of the target object, resulting in a relatively unrealistic effect. In the present technical solution, when the target effect is applied to the target object, in order to make the target effect adapt to the target object, the target object may be adjusted.

A part to which the target effect is applied may be used as the effect part. For example, if the target effect is a hat, a wig and the like, the effect part may be a head area; and if the target effect is glasses, the effect part may be eyes. The target image is an image obtained after the target effect is applied to the target object and the target effect is adjusted to be adapted to the effect part of the target object. That is, in the target image, the target effect has been applied to the target object, and the target effect is adapted to the target object.

For example, after the target object and the target effect are determined, the target effect may be applied to the effect part of the target object, and the effect part is adjusted to be adapted to the target effect, so as to obtain the target image.

According to the technical solution in the embodiment of the present disclosure, when the effect generation instruction is received, the target effect corresponding to the effect generation instruction and the target object to which the target effect needs to be applied may be determined. After the target object and the target effect are determined, the target effect may be applied to the target object, and the part corresponding to the target effect is adjusted to be adapted to the target effect, so that the obtained effect image is relatively realistic, thus improving the usage experience of the user.

FIG. 3 is a schematic flowchart of an image processing method provided in another embodiment of the present disclosure. On the basis of the foregoing embodiments, adjusting the target effect to be adapted to the effect part of the target object may include performing deformation processing on the effect part, so that the target effect is adapted to the effect part, and for exemplary implementation thereof, reference may be made to the detailed description of the present technical solution. Technical terms the same as or corresponding to those in the above embodiments are not described herein again.

As shown in FIG. 3, the method includes the following:
S210, a target effect and a target object in an image to be processed are determined according to a received effect generation instruction.
S220, the target effect is applied to the target object.

For example, an effect part corresponding to the target effect is determined, and the target effect is applied to the effect part.

The effect part is a part to which the target effect is applied.

For example, after the target effect is determined, the effect part corresponding to the target effect may be determined, and the target effect is applied to the effect part.

S230, deformation processing is performed on the effect part corresponding to the target effect, so that the target effect covers the effect part, thereby obtaining a target image.

If the effect part is the head, and the target effect is a hat, deformation processing may be performed on the head. The deformation processing may be to perform compression processing on a pixel point corresponding to a head area in the image to be processed, so that the target effect covers the effect part, thereby obtaining a target image in which the target effect is adapted to the effect part.

In the present embodiment, the effect part is a head area, the head area includes a facial subarea and a hair subarea, and obtaining the target image by adjusting the effect part corresponding to the target effect to be adapted to the target effect includes: obtaining a deformed hair subarea, by determining the head area corresponding to the target effect and performing deformation processing on the hair subarea of the head area; and obtaining the target image in which the target effect is adapted to the effect part, by covering the deformed hair subarea with the target effect.

The head area includes the facial subarea and the hair subarea. An area corresponding to a facial feature is used as the facial subarea. An area covered by hairs is used as the hair subarea. The reference for performing the deformation processing on the hair subarea may be determining an area covered by the target effect, and deforming the hair subarea into the area covered by the target effect, so that the target effect is adapted to the effect part.

It should also be noted that, during the process of deforming the hair subarea, in order to ensure that the target object is not distorted, it may be ensured that the pixel points of the facial subarea remain unchanged. In this way, it can be ensured that the facial feature remains unchanged, and is not affected by the deformation of the hair subarea.

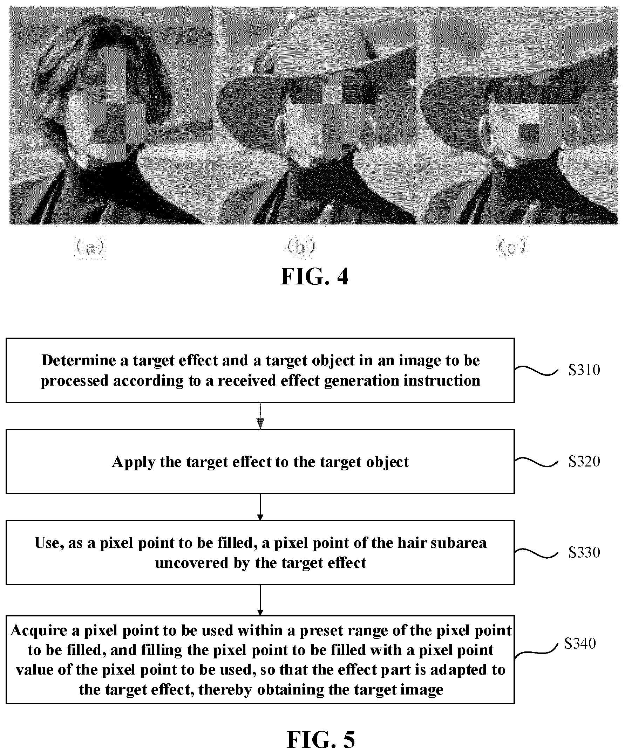

Exemplarily, before the target effect is applied to the target object, reference may be made to (a) in FIG. 4, and after the target effect is applied to the effect part in the related art, reference may be made to (b) in FIG. 4; and there is a problem that the effect part is not adapted to the target effect, so that the authenticity of the image is not high. After the target effect (hat) is applied to the effect part of the target object, deformation processing may be performed on the hair subarea of the effect part, so that the hat is adapted to the hair subarea. When the hair subarea is adjusted to be adapted to the hat, it is ensured that pixel points corresponding to the face remain unchanged, so as to obtain the target image in which the target effect is adapted to the effect part of the target object, as shown in (c) in FIG. 4.

According to the technical solution in the embodiment of the present disclosure, after the target effect and the target object are determined, and the target effect is applied to the target object, by means of performing distortion processing on the effect part, the target effect can be adapted to the target object, thereby improving the adaptation between the applied effect and the target object, and thus improving the authenticity of the image.

FIG. 5 is a schematic flowchart of an image processing method provided in another embodiment of the present disclosure. On the basis of the foregoing embodiments, after the target effect is applied to the effect part of the target object, the pixel point corresponding to the effect part may be processed, so that the target effect is adapted to the effect part, and for exemplary implementation thereof, reference may be made to the detailed description of the present technical solution. Technical terms the same as or corresponding to those in the above embodiments are not described herein again.

As shown in FIG. 5, the method includes the following:
S310, , a target effect and a target object in an image to be processed are determined according to a received effect generation instruction.
S320, the target effect is applied to the target object.
S330, a pixel point of the hair subarea uncovered by the target effect is used as a pixel point to be filled.

After the target effect is applied to the effect part of the target object, there may be a situation in which the target effect is not adapted to the effect part, and at this time, the pixel point of the hair subarea uncovered by the target effect is used as the pixel point to be filled. If the effect part is a head area, the head area includes a hair subarea. The target effect may be applied to the head area, some pixel points in the hair subarea are uncovered by the target effect, and such pixel points may be used as the pixel points to be filled.

For example, after the target effect is applied to the effect part (the hair subarea) of the target object, the pixel point of the hair subarea uncovered by the target effect is used as the pixel point to be filled.

S340, a pixel point to be used within a preset range of the pixel point to be filled is acquired, and the pixel point to be filled is filled with a pixel point value of the pixel point to be used, so that the effect part is adapted to the target effect, thereby obtaining the target image.

The preset range may be pixel points adjacent to the pixel point to be filled. Neighboring pixel points may be used as the pixel points to be used. The pixel point to be filled may be with the pixel point value of the pixel point to be used, so that the effect part is adapted to the target effect, so as to obtain the target image.

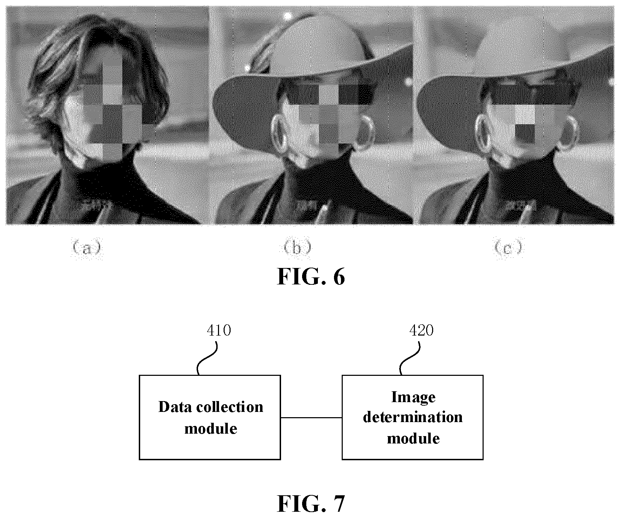

Exemplarily, before the target effect is applied to the target object, reference may be made to (a) in FIG. 6, and after the target effect is applied to the effect part in the related art, reference may be made to (b) in FIG. 6, and there is a problem that the effect part is not adapted to the target effect, so that the authenticity of the image is not high. After the target effect (hat) is applied to the effect part of the target object, the pixel points of the hair subarea, which are uncovered by the target effect, may be erased to obtain the pixel points to be filled. In order to ensure the authenticity of the image, the pixel points to be used around the pixel points to be filled on the most edges may be acquired, and the pixel points to be filled may be filled with the pixel values of the pixel points to be used, so that the hat is adapted to the hair subarea. When the hair subarea is adjusted to be adapted to the hat, it is ensured that the pixel points corresponding to the face remain unchanged, so as to obtain the target image in which the target effect is adapted to the effect part of the target object, as shown in (c) in FIG. 6.

According to the technical solution in the embodiment of the present disclosure, after the target effect and the target object are determined, and the target effect is applied to the target object, the pixel points corresponding to the effect part are erased and applied as background pixel points, so that the target effect can be adapted to the target object, thereby improving the adaptation between the applied effect and the target object, and thus improving the authenticity of the image.

FIG. 7 is a schematic structural diagram of an image processing apparatus provided in an embodiment of the present disclosure. As shown in FIG. 7, the apparatus includes a data collection module 410 and an image determination module 420.

The data collection module 410 is configured to determine a target effect and a target object in an image to be processed according to a received effect generation instruction; and the image determination module 420 is configured to obtain a target image in which the target object is adapted to the target effect, by applying the target effect to the target object and adjusting an effect part corresponding to the target effect to be adapted to the target effect.

On the basis of the above technical solution, the apparatus further includes: an effect instruction generation module, configured to: when it is detected that an effect generation control is triggered, generate the effect generation instruction; or, when it is determined, according to collected voice information, that an effect applying wake-up word is triggered, generate the effect generation instruction; or, when it is detected that a facial feature or posture information of at least one object to be processed in the image to be processed matches preset information, generate the effect generation instruction.

On the basis of the above technical solution, the data collection module includes: a target effect determination unit and a target object determination unit.

The target effect determination unit is configured to determine the target effect corresponding to the effect generation instruction.

The target object determination unit is configured to: if the image to be processed includes a plurality of objects to be processed, determine the target object from the plurality of objects to be processed according to a preset object determination rule, wherein the object determination rule includes at least one of using an object to be processed in a preset area in the image to be processed as the target object, using each of the plurality of objects to be processed as the target object, and using a preset main photographed object as the target object.

On the basis of the above technical solution, the image determination module is further configured to: determine the effect part corresponding to the target effect, and apply the target effect to the effect part.

On the basis of the above technical solution, the image determination module is further configured to: perform deformation processing on the effect part corresponding to the target effect, so that the target effect covers the effect part, thereby obtaining the target image.

On the basis of the above technical solution, the effect part is a head area, the head area includes a facial subarea and a hair subarea, and the image determination module is further configured to: obtain a deformed hair subarea, by determining the head area corresponding to the target effect and performing deformation processing on the hair subarea of the head area; and obtain the target image in which the target effect is adapted to the effect part, by covering the deformed hair subarea with the target effect.

On the basis of the above technical solution, the effect part includes a head area, the head area includes a hair subarea, and the image determination module includes: a to-be-filled pixel point determination unit and a target image determination unit

The to-be-filled pixel point determination unit is configured to use, as a pixel point to be filled, a pixel point of the hair subarea uncovered by the target effect.

The target image determination unit is configured to: acquire a pixel point to be used within a preset range of the pixel point to be filled, and fill the pixel point to be filled with a pixel point value of the pixel point to be used, so that the effect part is adapted to the target effect, thereby obtaining the target image.

According to the technical solution in the embodiment of the present disclosure, when the effect generation instruction is received, the target effect corresponding to the effect generation instruction and the target object to which the target effect needs to be applied may be determined. After the target object and the target effect are determined, the target effect may be applied to the target object, and the part corresponding to the target effect is adjusted to be adapted to the target effect, so that the obtained effect image is relatively realistic, thus improving the usage experience of the user.

The image processing apparatus provided in the embodiment of the present disclosure may execute the image processing method provided in any embodiment of the present disclosure, and has corresponding functional modules and beneficial effects for executing the method.

It is worth noting that, a plurality of units and modules included in the apparatus are only divided according to functional logic, but are not limited to the above division, as long as corresponding functions may be implemented; and in addition, specific names of the plurality of functional units are merely for ease of distinguishing each other, and are not used to limit the protection scope of the embodiments of the present disclosure.

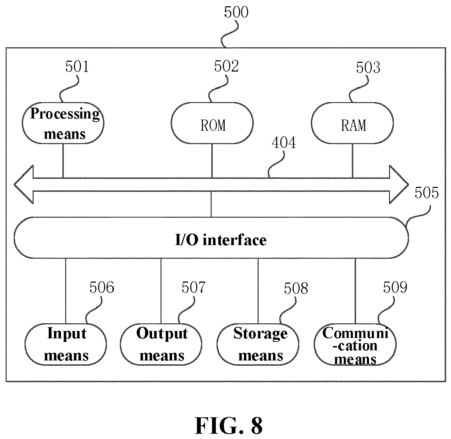

FIG. 8 is a schematic structural diagram of an electronic device provided in an embodiment of the present disclosure. Referring to FIG. 8 below, it illustrates a schematic structural diagram of an electronic device (e.g., a terminal device or a server in FIG. 8) 500 suitable for implementing the embodiments of the present disclosure. The electronic device 500 in the embodiment of the present disclosure may include, but is not limited to, mobile terminals such as mobile phones, notebook computers, digital broadcast receivers, PDAs (personal digital assistants), PADs (portable Android devices, PMPs (portable media players), vehicle-mounted terminals (e.g., vehicle-mounted navigation terminals), and the like, and fixed terminals such as digital TVs, desktop computers, and the like. The electronic device shown in FIG. 8 is merely an example, and should not bring any limitation to the functions and usage ranges of the embodiments of the present disclosure.

As shown in FIG. 8, the electronic device 500 may include a processing means (e.g., a central processing unit, a graphics processing unit, or the like) 501, which may execute various suitable actions and processes in accordance with a program stored in a read only memory (ROM) 502 or a program loaded from a storage means 508 into a random access memory (RAM) 503. In the RAM 503, various programs and data needed by the operations of the electronic device 500 are also stored. The processing means 501, the ROM 502 and the RAM 503 are connected with each other via a bus 504. An editing/output (I/O) interface 505 is also connected to the bus 504.

In general, the following means may be connected to the I/O interface 505: an editing means 506, including, for example, a touch screen, a touch pad, a keyboard, a mouse, a camera, a microphone, an accelerometer, a gyroscope, and the like; an output means 507, including, for example, a liquid crystal display (LCD), a speaker, a vibrator, and the like; a storage means 508, including, for example, a magnetic tape, a hard disk, and the like; and a communication means 509. The communication means 509 may allow the electronic device 500 to communicate in a wireless or wired manner with other devices to exchange data. Although FIG. 8 illustrates the electronic device 500 having a plurality of means, it should be understood that not all illustrated means are required to be implemented or provided. More or fewer means may alternatively be implemented or provided.

According to the embodiments of the present disclosure, the processes described above with reference to the flowcharts may be implemented as computer software programs. For example, the embodiments of the present disclosure include a computer program product, which includes a computer program carried on a non-transient computer-readable medium, and the computer program contains program codes for executing the method illustrated in the flowcharts. In such embodiments, the computer program may be downloaded and installed from a network via the communication means 509, or installed from the storage means 508, or installed from the ROM 502. When the computer program is executed by the processing means 501, the above functions defined in the method of the embodiments of the present disclosure are executed.

The names of messages or information interacted between a plurality of apparatuses in the embodiments of the present disclosure are for illustrative purposes only and are not intended to limit the scope of these messages or information.

The electronic device provided in the embodiments of the present disclosure belongs to the same concept as the image processing method provided in the above embodiments, for technical details that are not described in detail in the present embodiment, reference may be made to the above embodiments, and the present embodiment has the same beneficial effects as the above embodiments.

An embodiment of the present disclosure provides a computer storage medium, on which a computer program is stored, wherein the program, when being executed by a processor, implements the image processing method provided in the above embodiments.

It should be noted that, the computer-readable medium described above in the present disclosure may be either a computer-readable signal medium or a computer-readable storage medium, or any combination of the two. The computer-readable storage medium may be, for example, but is not limited to, an electrical, magnetic, optical, electromagnetic, infrared, or semiconductor system, apparatus or device, or a combination of any of the above. More specific examples of the computer-readable storage medium may include, but are not limited to: an electrical connection having one or more wires, a portable computer magnetic disk, a hard disk, a random access memory (RAM), a read only memory (ROM), an erasable programmable read only memory (EPROM or a flash memory), an optical fiber, a portable compact disc-read only memory (CD-ROM), an optical storage device, a magnetic storage device, or any suitable combination of the above. In the present disclosure, the computer-readable storage medium may be any tangible medium that contains or stores a program, wherein the program may be used by or in combination with an instruction execution system, apparatus or device. In the present disclosure, the computer-readable signal medium may include a data signal that is propagated in a baseband or used as part of a carrier, wherein the data signal carries computer-readable program codes. Such propagated data signal may take many forms, including, but not limited to, electromagnetic signals, optical signals, or any suitable combination thereof. The computer-readable signal medium may also be any computer-readable medium other than the computer-readable storage medium, and the computer-readable signal medium may send, propagate or transport the program for use by or in combination with the instruction execution system, apparatus or device. Program codes contained on the computer-readable medium may be transmitted with any suitable medium, including, but not limited to: an electrical wire, an optical cable, RF (radio frequency), and the like, or any suitable combination thereof.

In some embodiments, a client and a server may perform communication by using any currently known or future-developed network protocol, such as an HTTP (HyperText Transfer Protocol), and may be interconnected with any form or medium of digital data communication (e.g., a communication network). Examples of the communication network include a local area network ("LAN"), a wide area network ("WAN"), an international network (e.g., the Internet), and a peer-to-peer network (e.g., an ad hoc peer-to-peer network), as well as any currently known or future-developed network.

The computer-readable medium may be contained in the above electronic device; and it may also be present separately and is not assembled into the electronic device.

The computer-readable medium carries one or more programs that, when executed by the electronic device, cause the electronic device to: according to a received effect generation instruction, determine a target effect and a target object in an image to be processed; and obtain a target image in which the target object is adapted to the target effect by applying the target effect to the target object and adjusting an effect part corresponding to the target effect to be adapted to the target effect.

Computer program codes for executing the operations of the present disclosure may be written in one or more programming languages or combinations thereof. The programming languages include, but are not limited to, object-oriented programming languages, such as Java, Smalltalk, C++, and conventional procedural programming languages, such as the "C" language or similar programming languages. The program codes may be executed entirely on a user computer, executed partly on the user computer, executed as a stand-alone software package, executed partly on the user computer and partly on a remote computer, or executed entirely on the remote computer or a server. In the case involving the remote computer, the remote computer may be connected to the user computer by means of any type of network, including a local area network (LAN) or a wide area network (WAN), or it may be connected to an external computer (e.g., by means of the Internet using an Internet service provider).

The flowcharts and block diagrams in the drawings illustrate the system architecture, functions and operations of possible implementations of systems, methods and computer program products according to various embodiments of the present disclosure. In this regard, each block in the flowcharts or block diagrams may represent a part of a module, a program segment, or a code, which contains one or more executable instructions for implementing specified logical functions. It should also be noted that, in some alternative implementations, the functions annotated in the block may occur out of the sequence annotated in the drawings. For example, two blocks shown in succession may, in fact, be executed substantially concurrently, or the blocks may sometimes be executed in a reverse sequence, depending upon the functions involved. It should also be noted that, each block in the block diagrams and/or flowcharts, and combinations of the blocks in the block diagrams and/or flowcharts may be implemented by dedicated hardware-based systems for executing specified functions or operations, or combinations of dedicated hardware and computer instructions.

The units involved in the described embodiments of the present disclosure may be implemented in a software or hardware manner. The names of the units do not constitute limitations of the units themselves in a certain case, for example, a first acquisition unit may also be described as "a unit for acquiring at least two Internet Protocol addresses".

The functions described herein above may be executed, at least in part, by one or more hardware logic components. For example, without limitation, example types of the hardware logic components that may be used include: a field programmable gate array (FPGA), an application specific integrated circuit (ASIC), an application specific standard product (ASSP), a system on chip (SOC), a complex programmable logic device (CPLD), and so on.

In the context of the present disclosure, a machine-readable medium may be a tangible medium, which may contain or store a program for use by or in combination with the instruction execution system, apparatus or device. The machine-readable medium may be a machine-readable signal medium or a machine-readable storage medium. The machine-readable medium may include, but is not limited to, an electronic, magnetic, optical, electromagnetic, infrared, or semiconductor system, apparatus or device, or any suitable combination thereof. More specific examples of the machine-readable storage medium would include an electrical connection based on one or more wires, a portable computer disk, a hard disk, a random access memory (RAM), a read only memory (ROM), an erasable programmable read only memory (EPROM or a flash memory), an optical fiber, a compact disc-read only memory (CD-ROM), an optical storage device, a magnetic storage device, or any suitable combination thereof.

According to one or more embodiments of the present disclosure, Example 1 provides an image processing method, wherein the method includes:
determining a target effect and a target object in an image to be processed according to a received effect generation instruction; and
obtaining a target image in which the target object is adapted to the target effect, by applying the target effect to the target object and adjusting an effect part corresponding to the target effect to be adapted to the target effect.

According to one or more embodiments of the present disclosure, Example 2 provides an image processing method, wherein the method further includes:
for example, in response to detecting that an effect generation control is triggered, generating the effect generation instruction; or,
in response to determining, according to collected voice information, that an effect applying wake-up word is triggered, generating the effect generation instruction; or,
in response to detecting that a facial feature or posture information of at least one object to be processed in the image to be processed matches preset information, generating the effect generation instruction.

According to one or more embodiments of the present disclosure, Example 3 provides an image processing method, wherein the method further includes:
for example, determining the target effect and the target object in the image to be processed includes:
determining the target effect corresponding to the effect generation instruction; and
in response to determining that the image to be processed comprises a plurality of objects to be processed, determining the target object from the plurality of objects to be processed according to a preset object determination rule,
wherein the object determination rule includes at least one of using an object to be processed in a preset area in the image to be processed as the target object, using each of the plurality of objects to be processed as the target object, and using a preset main photographed object as the target object.

According to one or more embodiments of the present disclosure, Example 4 provides an image processing method, wherein the method further includes:
for example, applying the target effect to the target object includes:
determining the effect part corresponding to the target effect, and applying the target effect to the effect part.

According to one or more embodiments of the present disclosure, Example 5 provides an image processing method, wherein the method further includes:
for example, obtaining the target image in which the target object is adapted to the target effect, by adjusting the effect part corresponding to the target effect to be adapted to the target effect, includes:
performing deformation processing on the effect part corresponding to the target effect, so that the target effect covers the effect part, thereby obtaining the target image.

According to one or more embodiments of the present disclosure, Example 6 provides an image processing method, wherein the method further includes:
for example, the effect part is a head area, the head area comprises a hair subarea, and obtaining the target image by adjusting the effect part corresponding to the target effect to be adapted to the target effect includes:
obtaining a deformed hair subarea, by determining the head area corresponding to the target effect and performing deformation processing on the hair subarea of the head area; and
obtaining the target image in which the target effect is adapted to the effect part, by covering the deformed hair subarea with the target effect.

According to one or more embodiments of the present disclosure, Example 7 provides an image processing method, wherein the method further includes:
for example, the effect part comprises a head area, the head area comprises a hair subarea, and obtaining the target image by adjusting the effect part corresponding to the target effect to be adapted to the target effect includes:
easing pixels of the hair subarea, which are uncovered by the target effect, so as to obtain pixel points to be filled; and
acquiring a pixel point to be used within a preset range of the pixel point to be filled, and filling the pixel point to be filled with a pixel point value of the pixel point to be used, so that the effect part is adapted to the target effect, thereby obtaining the target image.

In addition, although a plurality of operations are described in a particular order, this should not be understood as requiring that these operations are executed in the particular sequence shown or in a sequential order. In certain circumstances, multitasking and parallel processing may be advantageous. Similarly, although several specific implementation details have been contained in the above discussion, these should not be construed as limiting the scope of the present disclosure. Certain features that are described in the context of separate embodiments may also be implemented in combination in a single embodiment. Conversely, a plurality of features that are described in the context of a single embodiment may also be implemented in a plurality of embodiments separately or in any suitable sub-combination.

## Claims

1. An image processing method, comprising:
determining a target effect and a target object in an image to be processed according to a received effect generation instruction; and
obtaining a target image in which the target object is adapted to the target effect, by applying the target effect to the target object and adjusting an effect part corresponding to the target effect to be adapted to the target effect.

2. The method according to claim 1, further comprising at least one of the following:
in response to detecting that an effect generation control is triggered, generating the effect generation instruction;
in response to determining, according to collected voice information, that an effect applying wake-up word is triggered, generating the effect generation instruction; or,
in response to detecting that a facial feature or posture information of at least one object to be processed in the image to be processed matches preset information, generating the effect generation instruction.

3. The method according to claim 1, wherein determining the target effect and the target object in the image to be processed comprises:
determining the target effect corresponding to the effect generation instruction; and
in response to determining that the image to be processed comprises a plurality of objects to be processed, determining the target object from the plurality of objects to be processed according to a preset object determination rule,
wherein the object determination rule comprises at least one of the following:
using an object to be processed in a preset area in the image to be processed as the target object,
using, separately, the plurality of objects to be processed as the target object, or
using a preset main photographed object as the target object.

4. The method according to claim 1, wherein applying the target effect to the target object comprises:
determining the effect part corresponding to the target effect, and applying the target effect to the effect part.

5. The method according to claim 1, wherein obtaining the target image in which the target object is adapted to the target effect, by adjusting the effect part corresponding to the target effect to be adapted to the target effect, comprises:
performing deformation processing on the effect part corresponding to the target effect, so that the target effect covers the effect part, thereby obtaining the target image.

6. The method according to claim 5, wherein the effect part is a head area, the head area comprises a hair subarea, and obtaining the target image by adjusting the effect part corresponding to the target effect to be adapted to the target effect comprises:
obtaining a deformed hair subarea, by determining the head area corresponding to the target effect and performing deformation processing on the hair subarea of the head area; and
obtaining the target image in which the target effect is adapted to the effect part, by covering the deformed hair subarea with the target effect.

7. The method according to claim 1, wherein the effect part comprises a head area, the head area comprises a hair subarea, and obtaining the target image by adjusting the effect part corresponding to the target effect to be adapted to the target effect comprises:
using, as a pixel point to be filled, a pixel point of the hair subarea uncovered by the target effect;
acquiring a pixel point to be used within a preset range of the pixel point to be filled, and filling the pixel point to be filled with a pixel point value of the pixel point to be used, so that the effect part is adapted to the target effect, thereby obtaining the target image.

8. An image processing means, comprising:
a data collection module, configured to determine a target effect and a target object in an image to be processed according to a received effect generation instruction; and
an image determination module, configured to obtain a target image in which the target object is adapted to the target effect by applying the target effect to the target object and adjusting an effect part corresponding to the target effect to be adapted to the target effect.

9. An electronic device, comprising:
one or more processors; and
a storage means, configured to store one or more programs,
wherein when the one or more programs are executed by the one or more processors, the one or more processors are caused to implement the image processing method according to any one of claims 1-7.

10. A storage medium, comprising a computer-executable instruction, wherein the computer-executable instruction, when executed by a computer processor, is configured for executing the image processing method according to any one of claims 1-7.
